# EUROPÄISCHE PATENTSCHRIFT

(11) **EP 3 798 878 B1**
(45) Veröffentlichungstag und Bekanntmachung des Hinweises auf die Patenterteilung: **09.11.2022**
(21) Anmeldenummer: 19199211.4
(22) Anmeldetag: 24.09.2019
(51) Int. Cl.: G06F 21/52, G05B 19/00, G05B 19/05

(54) **ANORDNUNG UND VERFAHREN ZUR SICHEREN AUSFÜHRUNG EINES AUTOMATISIERUNGSPROGRAMMS IN EINEM CLOUD-COMPUTING-UMFELD**
SYSTEM AND METHOD FOR SECURE EXECUTION OF AN AUTOMATION PROGRAM IN A CLOUD COMPUTATION ENVIRONMENT
DISPOSITIF ET PROCÉDÉ D'EXÉCUTION SÉCURISÉE D'UN PROGRAMME D'AUTOMATISATION DANS UN ENVIRONNEMENT INFORMATIQUE EN NUAGE

(43) Veröffentlichungstag der Anmeldung: 31.03.2021
(73) Patentinhaber: Siemens Aktiengesellschaft, 80333 München (DE)
(72) Erfinder: Zeltner, Armin, 91085 Weisendorf (DE); Kob, Peter, 90562 Heroldsberg (DE); Höfele, Markus, 68259 Mannheim (DE); Schrey, Rolf, 41189 Mönchengladbach (DE)

(56) Entgegenhaltungen:
- US-A1- 2016 248 642
- US-A1- 2019 163 173
- US-B1- 9 417 986

## Beschreibung

Die Erfindung betrifft eine Anordnung zur sicheren Ausführung eines Automatisierungsprogramms in einem Cloud-Computing-Umfeld gemäß dem Oberbegriff des Patentanspruchs 1, und ein Verfahren zur sicheren Ausführung eines Automatisierungsprogramms in einem Cloud-Computing-Umfeld gemäß dem Oberbegriff des Patentanspruchs 8.

In vielen technischen Bereichen wird vermehrt sogenanntes Cloud-Computing eingesetzt. Dabei handelt es sich im Prinzip um eine Rechner-Infrastruktur, die in einem übergeordneten oder öffentlichen Datennetzwerk, insbesondere dem Internet, verfügbar ist. Kern solcher Lösungen sind sogenannte Cloud-Server, in der Regel leistungsfähige und von mehreren Benutzern unabhängig nutzbare Rechenkapazitäten, deren Benutzung gegen ein Entgelt möglich ist. Es gibt auch private Cloud-Computing-Lösungen, die zwar nicht öffentlich sind, aber ebenso eine zentrale Server-Infrastruktur aufweisen, mit denen insbesondere Unternehmen mit mehreren Standorten oder multinationale Unternehmen ihre Datenverarbeitung und Datenhaltung zumindest teilweise zentralisieren. Die Cloud-Server arbeiten häufig mit Virtualisierungstechnologien, so dass ein Benutzer für seine Zwecke die Instanziierung einer virtuellen Maschine auslösen kann, wobei dann in dieser virtuellen Maschine seine Anwendung oder dergleichen abläuft. Analog dazu können auch Cloud-basierter Speicher bereitgestellt und auch andere Ressourcen genutzt werden.

Solche Cloud-Computing-Lösungen werden auch in der industriellen Automatisierungstechnik vermehrt genutzt. Eine der Anwendungen ist beispielsweise die "Virtualisierung" einer industriellen Steuerung (PLC - Programmable Logic Controller), wobei das industrielle Steuerungsprogramm, welches eine Automatisierungslösung, eine prozesstechnische Anlage oder dergleichen steuert, "in der Cloud", also auf einem Cloud-Server, abläuft, und über eine Datenverbindung von der zu steuernden Anlage Sensorwerte und andere Eingabeparameter empfängt und Befehle für Aktoren und andere Ausgangswerte zurückliefert.

Bei solchen Konfigurationen, bei dem auf einen Cloud-basierten Rechner (Cloud-Server) eine (ggf. virtuelle) Maschine installiert wird und damit auf einer "semi-lokalen" Ebene sensible Applikationen oder Funktionen, insbesondere eine industrielle Steuerungsaufgabe, ablaufen, besteht ein Nachteil darin, dass der Sicherheitslevel in Bezug auf Datensicherheit vom jeweiligen "Unterbau" der Virtualisierungslösung abhängt und von einem Nutzer/Kunden nicht sicher eingeschätzt werden kann. Dies bedeutet, dass die Technologien des Cloud-Computings für datentechnisch bzw. sicherheitstechnisch sensible Anwendungen oft nicht genutzt werden, weil die Befürchtung besteht, dass die in der Cloud-Lösung verwendeten Programme, Daten und Algorithmen ausgespäht werden können. Ein weiterer Nachteil besteht darin, dass für die Steuerung industrieller Automatisierungsanordnungen, beispielsweise bei der Produktion chemischer oder pharmazeutischer Erzeugnisse, herstellerspezifische (dedizierte) Programme und Rezepte für speicherprogrammierbare Steuerungen verwendet werden, deren Portierung auf eine Standard-Hardware, wie sie in den virtuellen Maschinen der Cloud-Server emuliert werden, schwierig ist. Eine deswegen oft notwendige Emulation einer dedizierten speicherprogrammierbaren Steuerung umfasst regelmäßig auch die Ausführung von Firmware und Betriebssystemen, die eigentlich für ein privates Umfeld (lokale Automatisierungsebene) gedacht sind, und die entsprechend schlecht gegen Ausspähen geschützt sind, wenn sie in einem öffentlichen Umfeld betrieben werden.

Die Druckschrift US 2016/0248642 A1 - Rajasekar "Logging as a Service" offenbart die Überwachung der Ausführung einer Software mittels eines netzwerkgestützten Dienstes, zu dem auf einer die Software ausführenden Hardware-Plattform ein lokaler Logging-Agent ausgeführt wird, der mit dem netzwerkgestützten Dienst verbunden ist.

Es ist also eine Aufgabe der vorliegenden Erfindung, ein Verfahren und eine Anordnung zur sicheren Ausführung eines Automatisierungsprogramms in einem Cloud-Computing-Umfeld vorzuschlagen.

Es ist eine Kernidee der erfindungsgemäßen Lösung, dass in einem Cloud-Umfeld eine dedizierte Computer-Hardware vorgesehen wird, die eine sichere Ablaufumgebung für kritische Funktionen, sensible Programme, Rezepte und dergleichen bietet, wobei es sich um eine speziell designte Hardware handeln soll, die entsprechend gegen Angriffe geschützt ist und deswegen weder eine handelsübliche PC-Hardware ist, noch eine standardisierte virtuelle Maschine auf einem öffentlich zugänglichen Server. Diese dedizierte Computer-Hardware soll den Datenaustausch mit der Automatisierungslösung über den Cloud-Server verschlüsselt abwickeln. Dabei kann die dedizierte Computer-Hardware entweder direkter Bestandteil der Cloud-Computing-Umgebung sein oder aber an diese mittels einer Datenverbindung angeknüpft sein.

Die Aufgabe wird insbesondere durch die Anordnung gemäß Patentanspruch 1 und durch das Verfahren gemäß Patentanspruch 8 gelöst.

Dabei ist zur Lösung der Aufgabe eine Anordnung zur sicheren Ausführung eines Automatisierungsprogramms in einem Cloud-Computing-Umfeld vorgesehen, wobei das Automatisierungsprogramm auf einer Computer-Hardware in einer öffentlich zugänglichen IT-Infrastruktur installiert ist, und wobei die Computer-Hardware mittels zumindest einer Datenverbindung mit einem Cloud-Server, insbesondere einem Server eines Cloud-Computing-Anbieters, verbunden ist. Dabei ist die Computer-Hardware eine dedizierte Hardware zur Ausführung des Automatisierungsprogramms, wobei die Computer-Hardware mit einer dedizierten Ablaufumgebung für das Automatisierungsprogramm ausgerüstet ist, und wobei die Datenverbindung und die Ablaufumgebung derart eingerichtet sind, dass mittels des Servers und der Datenverbindung der Ablauf des Automatisierungsprogramms kontrolliert werden kann. Erfindungsgemäß ist der Server daher zum Datenaustausch mit einer industriellen Automatisierungsanordnung eingerichtet, und das Automatisierungsprogramm ist somit vorteilhaft zur Steuerung oder Beeinflussung oder Kontrolle der industriellen Automatisierungsanordnung eingerichtet. Durch diesen Datenaustausch ist es somit möglich, aus einem Cloud-Umfeld heraus entsprechende lokale Einheiten zu steuern und zu kontrollieren, ohne die dedizierte Computer-Hardware einem lokalen Zugriff preis zu geben. Außerdem ist es so möglich, mehrere lokale Einheiten, die an verschiedenen Standorten lokalisiert sein können, mittels ein- und derselben Computer-Hardware zu steuern. Durch diese Anordnung ist es möglich, das Automatisierungsprogram und die darin enthaltenen sensiblen Informationen, insbesondere Rezepte, Anweisungen, Verfahrensschritte und dergleichen, in einer geschützten Umgebung auszuführen, wodurch sich ein wesentlich besserer Schutz gegen Ausspähen ergibt, als beim Ablauf auf einer Standard-Hardware. Darüber hinaus ergibt sich der Vorteil, dass die dedizierte Hardware auf ein gegebenenfalls bereits bestehendes Automatisierungsprogramm abgestimmt sein kann, so dass bestehende Automatisierungsprogramme, die zum Ablauf auf einer dedizierten Hardware geschaffen sind, ohne Veränderung und ohne erneuten Systemtest, Zertifizierung und andere kostentreibende Anpassungsschritte in der "Cloud" ablaufen können bzw. über die Cloud verfügbar gemacht werden können.

Die Aufgabe wird außerdem durch ein Verfahren zur sicheren Ausführung eines Automatisierungsprogramms in einem Cloud-Computing-Umfeld gelöst, wobei das Automatisierungsprogramm auf einer Computer-Hardware in einer öffentlich zugänglichen IT-Infrastruktur installiert wird. Dabei wird als die Computer-Hardware eine dedizierte Hardware zur Ausführung des Automatisierungsprogramms verwendet, wobei das Automatisierungsprogramm auf der Computer-Hardware mittels einer dedizierten Ablaufumgebung ausgeführt wird, und wobei der Ablauf des Automatisierungsprogramms mittels einer Datenverbindung kontrolliert wird. Erfindungsgemäß ist der Server daher zum Datenaustausch mit einer industriellen Automatisierungsanordnung eingerichtet, und das Automatisierungsprogramm ist somit vorteilhaft zur Steuerung oder Beeinflussung oder Kontrolle der industriellen Automatisierungsanordnung eingerichtet. Durch dieses Verfahren können die Vorteile realisiert werden, die bereits anhand der Anordnung diskutiert wurden.

Vorteilhafte Ausgestaltungen der vorliegenden Erfindung sind in den abhängigen Patentansprüchen angegeben. Die dabei beschriebenen Merkmale und deren Vorteile können sowohl einzeln, als auch in einer sinnfälligen Kombination miteinander realisiert werden.

In einer vorteilhaften Variante lädt die Computer-Hardware mittels der zumindest einen oder einer separaten Datenverbindung von einem Cloud-Server, insbesondere einem Server eines Cloud-Computing-Anbieters, das Automatisierungsprogramm. So kann ohne lokalen Zugriff an der dedizierten Hardware das System komplett administriert werden und insbesondere auf einfache Weise das Automatisierungsprogramm geändert werden. Dieser Zugriff kann vorteilhaft auf besondere Weise gesichert werden, um unautorisierten Zugriff (lesend oder schreibend) auf das Automatisierungsprogramm und dessen Programmparameter oder ("Rezepte") zu vermeiden.

Vorteilhaft ist die Ablaufumgebung eine Firmware und/oder ein Betriebssystem für ein industrielles Automatisierungsprogramm bzw. umfasst diese Software-Einheiten. Dadurch ist es möglich, ein bereits vorhandenes industrielles Automatisierungsprogramm ohne substantielle Änderungen zu verwenden. Dabei ist die Firmware und/oder das Betriebssystem und das damit betriebene Automatisierungsprogramm gegen ein Auslesen über die Datenverbindung gesichert. Durch solche technischen Einrichtungen, insbesondere Sicherheitsroutinen in einem Kommunikations-Stack der Computer-Hardware, kann insbesondere vorgesehen werden, dass zwar ein Automatisierungsprogramm und ggf. auch Teile der Ausführungsumgebung auf die dedizierte Computer-Hardware geladen, aber nicht mehr ausgelesen werden können. Das ist insbesondere dann von Vorteil, wenn auch die Ablaufumgebung, also die Firmware und/oder das Betriebssystem, ihrerseits schützenswerte, herstellerspezifische Details enthalten, die nicht offengelegt werden dürfen.

In einer vorteilhaften Ausgestaltung umfasst das Automatisierungsprogramm ein Rezept für eine industrielle Produktion, insbesondere für ein chemisches Produkt oder ein Arzneimittel, oder aber auch eine Steuerungssequenz zur Produktion eines diskreten Produkts. Dies ermöglicht Geschäftsmodelle, die darauf basieren, dass solche Produkte auch an Standorten produziert werden können, denen man nicht das komplette Produktions-Know-how anvertrauen möchte. Ein lokaler Know-how-Diebstahl in der eigentlichen Automatisierungsumgebung bzw. Produktionsumgebung kann nämlich somit nicht die sensiblen Rezepte bzw. Produktionsschritte oder Verfahrensschritte oder Regelalgorithmen des Automatisierungsprogramms umfassen.

Vorteilhaft ist der Server daher zum Datenaustausch mit einer industriellen Automatisierungsanordnung eingerichtet, und das Automatisierungsprogramm ist somit vorteilhaft zur Steuerung oder Beeinflussung oder Kontrolle der industriellen Automatisierungsanordnung eingerichtet. Durch diesen Datenaustausch ist es somit möglich, aus einem Cloud-Umfeld heraus entsprechende lokale Einheiten zu steuern und zu kontrollieren, ohne die dedizierte Computer-Hardware einem lokalen Zugriff preis zu geben. Außerdem ist es so möglich, mehrere lokale Einheiten, die an verschiedenen Standorten lokalisiert sein können, mittels ein- und derselben Computer-Hardware zu steuern.

Vorteilhaft wird die Kommunikation in der Cloud zwischen dem Edge-Device und der dedizierten Computer-Hardware, und insbesondere sogar bis zum Automatisierungsprogramm, gesichert, Das kann vorzugsweise mittels Verschlüsselung erfolgen.

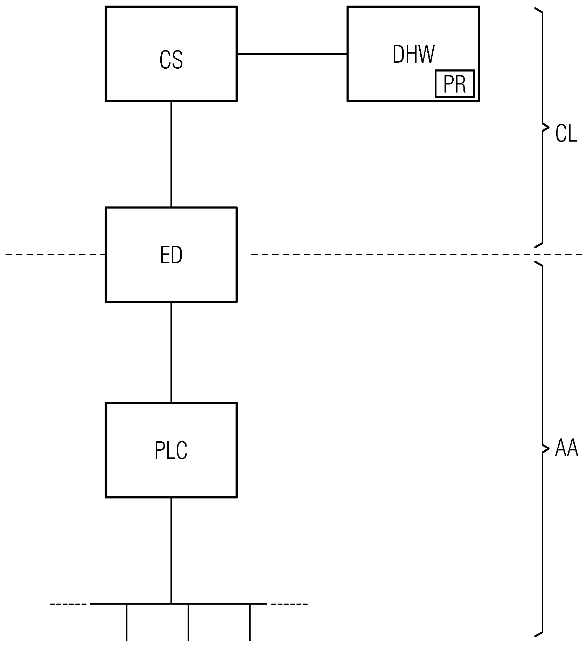

Ein Ausführungsbeispiel der erfindungsgemäßen Anordnung wird nachfolgend anhand der Zeichnung erläutert. Das Ausführungsbeispiel dient gleichzeitig der Erläuterung eines erfindungsgemäßen Verfahrens.

Dabei zeigt die einzige Figur in einer schematischen Darstellung eine lokale Automatisierungsanordnung und ein Cloud-Computing-Umfeld mit einem Cloud-Server und einer dedizierten Computer-Hardware.

In der Figur wird zwischen einer lokalen, privaten Automatisierungsebene, die sich unterhalb der waagerecht gestrichelten Linie befindet, und einer öffentlichen Ebene, der sogenannten Cloud CL, beispielsweise im Internet, die sich oberhalb der waagerecht gestrichelten Linie befindet, unterschieden. Stellvertretend für eine lokale Automatisierungsanordnung AA, also beispielsweise einer prozesstechnischen Anlage, ist in der Figur die speicherprogrammierbare Steuerung PLC gezeigt, die mittels einer Datenverbindung mit einem industriellen Edge-Device ED verbunden ist. Dabei hat das industrielle Edge-Device ED nicht nur eine Datenverbindung zu den Komponenten der industriellen Automatisierungsanordnung, also im Kontext der Figur der speicherprogrammierbaren Steuerung PLC, sondern auch eine weitere Datenverbindung in den öffentlichen Raum, hierbei der sogenannten "Cloud" CL. Bestandteil der Cloud CL ist ein Cloud-Server CS, in diesem Fall ein Server eines Cloud-Computing-Anbieters, der eine Vielzahl virtueller Maschinen (nicht dargestellt) für eine Vielzahl unterschiedlicher Kunden ausführen ("hosten") kann. Mittels einer weiteren Datenverbindung ist der Cloud-Server CS mit einer dedizierten Computer-Hardware DHW verbunden. Die dedizierte Computer-Hardware DHW kann Bestandteil der Cloud-Computing-Umgebung sein, kann jedoch auch in einem anderen Netzwerk, insbesondere in einem weiteren, privaten Firmennetzwerk, angeordnet sein. Es ist jedoch auch möglich, dass die dedizierte Computer-Hardware DHW Bestandteil derselben Server-Farm oder desselben Rechenzentrums ist, welches auch den Cloud-Server CS bereitstellt. Insbesondere ist es möglich, dass die dedizierte Computer-Hardware DHW als eine Computer-Einsteckkarte ausgeführt ist und beispielsweise sogar in demselben Servergehäuse betrieben wird, wie der hier dargestellte Cloud-Server CS.

Im vorliegenden Ausführungsbeispiel ist die dedizierte Computer-Hardware DHW eine Rechnereinheit, die hinsichtlich ihres Prozessors, Speichers und der Architektur ähnlich oder sogar identisch zu einer speicherprogrammierbaren Steuerung ist, wie sie in prozesstechnischen oder automatisierungstechnischen Anlagen zum Einsatz kommt. Im Unterschied zu den lokal betriebenen speicherprogrammierbaren Steuerungen wie auch der hier dargestellten, lokalen Steuerung PLC ist die dedizierte Computer-Hardware DHW jedoch hinsichtlich ihrer Firmware und hinsichtlich ihrer Peripherie derart ausgestaltet, dass Sensoren und Aktoren, die im lokalen industriellen Umfeld üblicher Weise direkt mittels sogenannter I/O-Baugruppen an der industriellen Steuerung PLC angeschlossen sind, mittels der dedizierten Computer-Hardware DHW über einen Datenkanal oder mehreren Datenkanäle angesprochen bzw. ausgelesen werden, die über eine Datenverbindung über den Cloud-Server CS in die lokale Ausführungsebene (Automatisierungsebene) geführt sind und dort beispielsweise mit einer abgesetzten I/O-Baugruppe ("Remote Shelf") Daten austauschen oder eine dort angesiedelte speicherprogrammierbare Steuerung PLC als Kommunikationspartner haben, wobei dann diese lokale speicherprogrammierbare Steuerung PLC zum einen Sensorwerte der Automatisierungslösung für die dedizierte Computer-Hardware DHW bereitstellt, und andererseits Befehle (Aktorenwerte, Kommandos) der dedizierten Computer-Hardware DHW empfängt und auf die lokale Automatisierungslösung anwendet.

In einem bevorzugten Ausführungsbeispiel ist das industrielle Edge-Device ED als Gateway-Komponente zwischen dem lokalen und dem öffentlichen Netzwerk geschaltet, wobei das industrielle Edge-Device ED neben Sicherheitsfunktionen (z.B. Firewall) auch andere Funktionen wahrnehmen kann, beispielsweise das Umrechnen von Sensoren-Daten, Protokollierungsfunktionen, Administrierungsfunktionen und dergleichen. Insbesondere kann das industrielle Edge-Device ED auch eine Benutzeroberfläche bereitstellen, beispielsweise über ein Web-Interface, womit es einem Benutzer möglich ist, die hier gezeigte Lösung zur sicheren Ausführung eines Automatisierungsprogramms zu steuern und zu kontrollieren.

Im folgenden Ausführungsbeispiel soll davon ausgegangen werden, dass eine Anzahl von lokalen Produktionseinrichtungen eines Unternehmens durch eine Software kontrolliert wird, die auf dem Cloud-Server CS abläuft. Beispielsweise kann damit ein Mineralölunternehmen eine Anzahl von Raffinerien steuern. Der Cloud-Server bzw. das darauf ablaufende Organisationsprogramm (MES - Manufacturing Execution System) steuert also beispielsweise die Auslastung und kontrolliert den Betrieb mehrerer petrochemischer Anlagen oder dergleichen. Nun sei angenommen, dass ein spezielles chemisches Produkt oder eine spezielle Arznei mittels eines prozesstechnischen Verfahrens hergestellt werden soll, wobei bislang das entsprechende, geheime Rezept und somit die Spezifika der Herstellung des Produkts in einer lokalen speicherprogrammierbare Steuerung gespeichert und dort zum Ablauf gebracht wurden, womit also lokal mit lokalem Know-how das entsprechende Produkt gefertigt wurde. Aus Gründen der Datensicherheit soll jetzt allerdings vermieden werden, dass das entsprechende Know-how und damit das Rezept und das zyklische Automatisierungsprogramm PR für den prozesstechnischen Produktionsschritt lokal in mehreren Standorten/Anlagen vorgehalten wird, sondern gegen lokalen Zugriff gesichert wird. In diesem Fall initiiert ein Benutzer, beispielsweise von einem Administrierungsserver aus oder über Zugriff auf das gezeigte Edge-Device ED, dass die dedizierte Computer-Hardware DHW mit dem entsprechenden Automatisierungsprogramm PR und dem Rezept zur Herstellung des speziellen Produkts bzw. der speziellen Arznei geladen wird. Gleichzeitig wird ein Datenkanal zwischen der lokalen Anlage, hier der speicherprogrammierbaren Steuerung PLC, und der dedizierten Computer-Hardware DHW bereitgestellt. Die lokale speicherprogrammierbare Steuerung PLC ist dabei mit den Sensoren und Aktoren der Produktionsanlage verbunden und wird hinsichtlich der Aktoren von der dedizierten Computer-Hardware DHW und dem dort ablaufenden Automatisierungsprogramm ferngesteuert, liefert dazu in Gegenrichtung Sensorwerte und andere Informationen aus der lokalen Produktionsumgebung als Eingangsparameter für das Automatisierungsprogramm.

In einer Ausführungsform können auch mehrere lokale Produktionseinheiten quasi-gleichzeitig von der dedizierten Computer-Hardware DHW und dem dort ablaufenden Automatisierungsprogramm gesteuert werden. Dies ist im Wesentlichen eine Frage der Rechenkapazität und der Eigenschaften der Datenverbindungen.

Die dedizierte Computer-Hardware DHW umfasst also das ebenso dedizierte Automatisierungsprogramm PR und eine im Wesentlichen identische Kopie einer Firmware, die auch auf einer lokalen Variante der dedizierten Computer-Hardware DHW zum Einsatz kommen würde. Der Unterschied besteht zum einen darin, dass die Firmware und das Automatisierungsprogramm auf der hier gezeigten dedizierten Computer-Hardware gegen Auslesen geschützt sind; dies betrifft selbstverständlich auch das Rezept und andere vertrauliche Informationen, die zum Ablauf des Automatisierungsprogramms benötigt werden. Ein weiterer Unterschied besteht darin, dass Informationen über die lokalen Zustände, also das sogenannte Prozessabbild, nicht von der dedizierten Computer-Hardware DHW durch dort lokale Sensoren erfasst wird, sondern von einer lokalen Einheit der Automatisierungsanordnung AA, beispielsweise der speicherprogrammierbaren Steuerung PLC, erhält. Umgekehrt werden auch Aktoren nicht an direkt angeschlossene Peripherie der dedizierten Computer-Hardware DHW angeschlossen, sondern über eine lokale Einheit angesteuert, im vorliegenden Ausführungsbeispiel der speicherprogrammierbaren Steuerung PLC. Dabei sind die Datenverbindungen selbstverständlich auf eine entsprechende Bandbreite und entsprechend kurze Latenzzeiten abzustimmen.

Die dedizierte Computer-Hardware DHW ist also eine spezielle Hardware, die für industrielle Zwecke speziell entwickelt ist und beispielsweis eine spezielle speicherprogrammierbare Steuerung emulieren (nachbilden) kann, oder sogar im Wesentlichen aus den relevanten Hardware-Baugruppen (Prozessor, Speicher, etc.) der bislang lokal eingesetzten speicherprogrammierbaren Steuerung besteht. Wichtig ist, dass durch die hier gezeigte Architektur sicherheitskritische Informationen, wie beispielsweise Firmware, Automatisierungsprogramm, Rezepte oder auch andere sicherheitskritische Hardware-Informationen wie beispielsweise TPM-Module, Krypto-Module, etc. geschützt sind. Durch die Separierung der dedizierten Computer-Hardware DHW von dem allgemein zugänglichen und eine Standard-Hardware umfassenden oder nachbildenden Cloud-Server CS lassen sich die genannten vertraulichen Informationen und abzusichernden Hardware-Merkmale besonders effektiv gegen Auslesen und anderen unautorisierten Zugriff schützen. Im Gegensatz zu Lösungen, bei denen die zu schützenden Programme oft auf virtuellen Maschinen ablaufen, kann die hier gezeigte dedizierte Computer-Hardware DHW nicht unautorisiert dupliziert werden. Dies bedeutet, dass bei herkömmlichen Virtualisierungslösungen komplette virtuelle Maschinen mit samt dem enthaltenen Automatisierungsprogramm, Rezepten, Daten und anderen Informationen einfach dupliziert oder "geklont" werden können und somit missbräuchlich verwendet werden können. Dies wird mit der hier vorgestellten Lösung verhindert.

Ein weiterer Vorteil der dargestellten Architektur liegt darin, dass eine Administrierung des Systems wie bei jeder anderen Cloud-basierten Lösung beim Vorliegen entsprechender Zugriffsrechte und ggf. Zertifikaten von fast jedem Ort aus "Remote" bewerkstelligt werden kann.

## Patentansprüche

1. Anordnung zur sicheren Ausführung eines Automatisierungsprogramms (PR) in einem Cloud-Computing-Umfeld (CL), wobei das Automatisierungsprogramm (PR) auf einer Computer-Hardware (DHW) in einer öffentlich zugänglichen IT-Infrastruktur installiert ist, und
wobei die Computer-Hardware (DHW) mittels zumindest einer Datenverbindung mit einem Cloud-Server (CS), insbesondere einem Server eines Cloud-Computing-Anbieters, verbunden ist,
wobei die Computer-Hardware (DHW) eine dedizierte Hardware zur Ausführung des Automatisierungsprogramms ist, dass die Computer-Hardware (DHW) mit einer dedizierten Ablaufumgebung für das Automatisierungsprogramm (PR) ausgerüstet ist, und
wobei die Datenverbindung und die Ablaufumgebung derart eingerichtet sind, dass mittels des Servers und der Datenverbindung der Ablauf des Automatisierungsprogramms (PR) kontrolliert werden kann,
**dadurch gekennzeichnet,**
**dass** der Server (CS) zum Datenaustausch mit einer industriellen Automatisierungsanordnung (AA) und das Automatisierungsprogramm (PR) zur Steuerung oder Beeinflussung oder Kontrolle der industriellen Automatisierungsanordnung (AA) eingerichtet sind.

2. Anordnung nach Patentanspruch 1,
**dadurch gekennzeichnet,**
**dass** vorgesehen ist, dass mittels der Ablaufumgebung und einer der Datenverbindungen das Automatisierungsprogramm (PR) auf die Computer-Hardware (DHW) übertragen wird.

3. Anordnung nach einem der vorhergehenden Patentansprüche, **dadurch gekennzeichnet,**
**dass** die Ablaufumgebung eine Firmware und/oder ein Betriebssystem für ein industrielles Automatisierungsprogramm (PR) umfasst.

4. Anordnung nach Patentanspruch 3,
**dadurch gekennzeichnet,**
**dass** die Firmware und/oder das Betriebssystem und das Automatisierungsprogramm (PR) gegen ein Auslesen über die Datenverbindung gesichert sind.

5. Anordnung nach einem der vorherigen Patentansprüche,
**dadurch gekennzeichnet,**
**dass** das Automatisierungsprogramm (PR) ein Rezept für eine industrielle Produktion, insbesondere für ein chemisches Produkt oder ein Arzneimittel, umfasst.

6. Anordnung nach einem der vorhergehenden Patentansprüche, **dadurch gekennzeichnet,**
**dass** für den Datenaustausch zwischen dem Server und der industriellen Automatisierungsanordnung (AA) ein industrielles Edge-Device (ED) geschaltet ist, wobei das industrielle Edge-Device (ED) zur Kontrolle des Datenaustauschs zwischen einem privaten Datennetzwerk mit der industriellen Automatisierungsanordnung (AA) und der Cloud-Umgebung eingerichtet ist.

7. Anordnung nach Patentanspruch 6,
**dadurch gekennzeichnet,**
**dass** das Edge-Device (ED) zum Aufbau einer sicheren, insbesondere verschlüsselten, Kommunikationsverbindung zu dem Automatisierungsprogramm (PR) eingerichtet ist.

8. Verfahren zur sicheren Ausführung eines Automatisierungsprogramms in einem Cloud-Computing-Umfeld (CL),
wobei das Automatisierungsprogramm (PR) auf einer Computer-Hardware (DHW) in einer öffentlich zugänglichen IT-Infrastruktur installiert wird,
wobei als die Computer-Hardware (DHW) eine dedizierte Hardware zur Ausführung des Automatisierungsprogramms (PR) verwendet wird, und
wobei die Computer-Hardware (DHW) mittels zumindest einer Datenverbindung mit einem Cloud-Server (CS), insbesondere einem Server eines Cloud-Computing-Anbieters, verbunden ist,
wobei das Automatisierungsprogramm (PR) auf der Computer-Hardware (DHW) mittels einer dedizierten Ablaufumgebung ausgeführt wird, und
wobei der Ablauf des Automatisierungsprogramms (PR) mittels der Datenverbindung kontrolliert wird,
**dadurch gekennzeichnet,**
**dass** mittels des Servers (CS) der Datenaustausch zwischen der Computer-Hardware (DHW) und einer industriellen Automatisierungsanordnung (AA) zur Steuerung oder Beeinflussung oder Kontrolle der industriellen Automatisierungsanordnung (AA) erfolgt.

9. Verfahren nach Patentanspruch 8,
**dadurch gekennzeichnet,**
**dass** die Computer-Hardware (DHW) mittels einer Datenverbindung von dem Cloud-Server (CS) das Automatisierungsprogramm (PR) lädt.

10. Verfahren nach Patentanspruch 8 oder 9,
**dadurch gekennzeichnet,**
**dass** für die Ablaufumgebung eine Firmware und/oder ein Betriebssystem für ein industrielles Automatisierungsprogramm (PR) verwendet wird.

11. Verfahren nach Patentanspruch 10,
**dadurch gekennzeichnet,**
**dass** die Firmware und/oder das Betriebssystem und das Automatisierungsprogramm (PR) gegen ein Auslesen über eine Datenverbindung gesichert werden.

12. Verfahren nach einem der vorherigen Patentansprüche 8-11,
**dadurch gekennzeichnet,**
**dass** das Automatisierungsprogramm (PR) ein Rezept für eine industrielle Produktion, insbesondere für ein chemisches Produkt oder ein Arzneimittel, umfasst, und
**dass** mittels des Rezepts die industrielle Produktion gesteuert wird.

13. Verfahren nach einem der Patentansprüche 8-12,
**dadurch gekennzeichnet,**
**dass** für den Datenaustausch zwischen dem Server und der industriellen Automatisierungsanordnung (AA) ein industrielles Edge-Device (ED) geschaltet ist, wobei durch das industrielle Edge-Device (ED) eine Kontrolle des Datenaustauschs zwischen einem privaten Datennetzwerk mit der industriellen Automatisierungsanordnung (AA) und der Cloud-Umgebung durchgeführt wird.

14. Verfahren nach Patentanspruch 13,
**dadurch gekennzeichnet,**
**dass** die Kommunikation zwischen dem Edge-Device (ED) und dem Automatisierungsprogramm (PR) gesichert, insbesondere verschlüsselt, abgewickelt wird.

## Claims

1. Arrangement for secure execution of an automation program (PR) in a cloud computing environment (CL),
wherein the automation program (PR) is installed on computer hardware (DHW) in a publicly accessible IT infrastructure, and wherein the computer hardware (DHW) is connected by means of at least one data connection to a cloud server (CS), in particular a server of a cloud computing provider,
wherein the computer hardware (DHW) is dedicated hardware for execution of the automation program,
wherein the computer hardware (DHW) is equipped with a dedicated runtime environment for the automation program (PR), and
wherein the data connection and the runtime environment are configured in such a way that the running of the automation program (PR) can be monitored by means of the server and the data connection,
**characterized in that**
the server (CS) is configured for data exchange with an industrial automation arrangement (AA) and the automation program (PR) is configured to control or influence or monitor the industrial automation arrangement (AA).

2. Arrangement according to Patent Claim 1,
**characterized in that**
it is provided that the automation program (PR) is transferred onto the computer hardware (DHW) by means of the runtime environment and one of the data connections.

3. Arrangement according to one of the preceding patent claims,
**characterized in that**
the runtime environment comprises firmware and/or an operating system for an industrial automation program (PR).

4. Arrangement according to Patent claim 3,
**characterized in that**
the firmware and/or the operating system and the automation program (PR) are secured against readout via the data connection.

5. Arrangement according to one of the preceding patent claims,
**characterized in that**
the automation program (PR) comprises a recipe for an industrial production, in particular for a chemical product or a pharmaceutical product.

6. Arrangement according to one of the preceding patent claims,
**characterized in that**
an industrial edge device (ED) is connected for the data exchange between the server and the industrial automation arrangement (AA), wherein the industrial edge device (ED) is configured to monitor the data exchange between a private data network with the industrial automation arrangement (AA) and the cloud environment.

7. Arrangement according to Patent Claim 6,
**characterized in that**
the edge device (ED) is configured to set up a secure, in particular encrypted, communication connection to the automation program (PR).

8. Method for secure execution of an automation program in a cloud computing environment (CL),
wherein the automation program (PR) is installed on computer hardware (DHW) in a publicly accessible IT infrastructure, wherein dedicated hardware is used as the computer hardware (DHW) to execute the automation program (PR),
wherein the computer hardware (DHW) is connected by means of at least one data connection to a cloud server (CS), in particular a server of a cloud computing provider,
wherein the automation program (PR) is executed on the computer hardware (DHW) by means of a dedicated runtime environment, and
wherein the running of the automation program (PR) is monitored by means of the data connection,
**characterized in that**
the data exchange between the computer hardware (DHW) and an industrial automation arrangement (AA) to control or influence or monitor the industrial automation arrangement (AA) is performed by means of the server (CS).

9. Method according to Patent Claim 8,
**characterized in that**
the computer hardware (DHW) loads the automation program (PR) by means of a data connection from the cloud server (CS).

10. Method according to Patent Claim 8 or 9,
**characterized in that**
firmware and/or an operating system for an industrial automation program (PR) is/are used for the runtime environment.

11. Method according to Patent Claim 10,
**characterized in that**
the firmware and/or the operating system and the automation program (PR) are secured against readout via a data connection.

12. Method according to one of the preceding Patent Claims 8-11,
**characterized in that**
the automation program (PR) comprises a recipe for an industrial production, in particular for a chemical product or a pharmaceutical product, and
**in that** the industrial production is controlled by means of the recipe.

13. Method according to one of Patent Claims 8-12,
**characterized in that**
an industrial edge device (ED) is connected for the data exchange between the server and the industrial automation arrangement (AA), wherein the data exchange between a private data network with the industrial automation arrangement (AA) and the cloud environment is monitored by the industrial edge device (ED).

14. Method according to Patent Claim 13,
**characterized in that**
the communication between the edge device (ED) and the automation program (PR) is performed in a secured, in particular encrypted, manner.

## Revendications

1. Dispositif d'exécution sécurisé d'un programme (PR) d'automatisation dans un environnement (CL) informatique en nuage,
dans lequel le programme (PR) d'automatisation est installé sur un matériel (DHW) d'ordinateur dans une infrastructure IT accessible publiquement, et
dans lequel le matériel (DHW) d'ordinateur est relié au moyen d'au moins une liaison de données à un serveur (CS) en nuage, notamment à un serveur d'un soumissionnaire informatique en nuage,
dans lequel le matériel (DHW) d'ordinateur est un matériel dédié d'exécution du programme d'automatisation, et en ce que le matériel (DHW) d'ordinateur est équipé d'un environnement dédié de déroulement du programme (PR) d'automatisation, et
dans lequel la liaison de données et l'environnement de déroulement sont conçus de manière à pouvoir, au moyen du serveur et de la liaison de données, contrôler le déroulement du programme (PR) d'automatisation, **caractérisé**
**en ce que** le serveur (CS) est conçu pour l'échange de données avec un dispositif (AA) d'automatisation industrielle et le programme (PR) d'automatisation pour commander ou influencer ou contrôler le dispositif (AA) d'automatisation industriel.

2. Dispositif suivant la revendication 1,
**caractérisé**
**en ce qu'**il est prévu de transmettre, au moyen de l'environnement de déroulement et de l'une des liaisons de données, le programme (PR) d'automatisation au matériel (DHW) d'ordinateur.

3. Dispositif suivant l'une des revendications précédentes, **caractérisé**
**en ce que** l'environnement de déroulement comprend un Firmware et/ou un système de fonctionnement d'un programme (PR) d'automatisation industrielle.

4. Dispositif suivant la revendication 3,
**caractérisé**
**en ce que** le Firmware et/ou les systèmes de fonctionnement et le programme (PR) d'automatisation sont sécurisés par la liaison de données vis-à-vis d'une lecture.

5. Dispositif suivant l'une des revendications précédentes, **caractérisé**
**en ce que** le programme (PR) d'automatisation comprend une recette pour une production industrielle, notamment pour un produit chimique ou un médicament.

6. Dispositif suivant l'une des revendications précédentes, **caractérisé**
**en ce qu'**un dispositif edge (ED) industriel est monté pour l'échange de données entre le serveur et le dispositif (AA) d'automatisation industrielle, le dispositif edge (ED) industriel étant conçu pour le contrôle de l'échange de données entre un réseau de données privé ayant le dispositif (AA) d'automatisation industrielle et l'environnement en nuage.

7. Dispositif suivant la revendication 6,
**caractérisé**
**en ce que** le dispositif edge (ED) est conçu pour l'établissement d'une liaison de communication sécurisée, notamment chiffrée, avec le programme (PR) d'automatisation.

8. Procédé d'exécution sécurisée d'un programme d'automatisation dans un environnement (CL) informatique en nuage,
dans lequel on installe le programme (PR) d'automatisation sur un matériel (DHW) d'ordinateur dans une infrastructure IT accessible publiquement,
dans lequel on utilise, comme matériel (DHW) d'ordinateur, un matériel dédié d'exécution du programme (PR) d'automatisation, et
dans lequel le matériel (DHW) d'ordinateur est, au moyen d'au moins une liaison de données, relié à un serveur (CS) en nuage, notamment un serveur d'un soumissionnaire informatique en nuage,
dans lequel on exécute le programme (PR) d'automatisation sur le matériel (DHW) d'ordinateur au moyen d'un environnement de déroulement dédié, et
dans lequel on contrôle le déroulement du programme (PR) d'automatisation au moyen de la liaison de données, **caractérisé**
**en ce que** le serveur (CS) est conçu pour l'échange de données, entre le matériel (DHW) d'ordinateur et un dispositif (AA) d'automatisation industrielle, s'effectue pour commander ou influencer ou contrôler le dispositif (AA) d'automatisation industrielle.

9. Procédé suivant la revendication 8,
**caractérisé**
**en ce que** le matériel (DHW) d'ordinateur charge, au moyen d'une liaison de données, le programme (PR) d'automatisation à partir du serveur (CS) en nuage.

10. Procédé suivant la revendication 8 ou 9,
**caractérisé**
**en ce que** l'on utilise, pour l'environnement de déroulement, un Firmware et/ou un système de fonctionnement pour le programme (PR) d'automatisation industrielle.

11. Procédé suivant la revendication 10,
**caractérisé**
**en ce qu'**on sécurise par une liaison de données le Firmware et/ou le système de fonctionnement et le programme (PR) d'automatisation vis-à-vis d'un piratage.

12. Procédé suivant l'une des revendications 8 à 11 précédentes, **caractérisé**
**en ce que** le programme (PR) d'automatisation comprend une recette pour une production industrielle, notamment pour un produit chimique ou un médicament, et **en ce que** l'on commande la production industrielle au moyen de la recette.

13. Procédé suivant l'une des revendications 8 à 12, **caractérisé**
**en ce qu'**un dispositif edge (ED) industriel est monté pour l'échange de données entre le serveur et le dispositif (AA) d'automatisation industrielle, dans lequel, par le dispositif edge (ED) industriel, on effectue un contrôle de l'échange de données entre un réseau de données primaire ayant le dispositif (AA) d'automatisation industrielle et l'environnement en nuage.

14. Procédé suivant la revendication 13,
**caractérisé**
**en ce que** l'on fait se dérouler la communication entre le dispositif edge (ED) et le programme (PR) d'automatisation d'une manière sécurisée, notamment chiffrée.
